# EUROPEAN PATENT SPECIFICATION

(11) **EP 0 361 692 B1**
(45) Date of publication and mention of the grant of the patent: **14.12.1994**
(21) Application number: 89308817.9
(22) Date of filing: 31.08.1989
(51) Int. Cl.: G01N 27/406

(54) **Sensor for determining relative amount of oxygen containing gas in a gas mixture**
Sensor zur Bestimmung der relativen Quantität von einem Sauerstoff enthaltenden Gas in einer Gasmischung
Détecteur pour déterminer la quantité relative d'un gaz contenant de l'oxygène dans un mélange de gaz

(30) Priority: 30.09.1988 US 251622
(43) Date of publication of application: 04.04.1990
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: Logothetis, Eleftherios M., Birmingham Michigan 48009 (US); Soltis, Richard E., Redford Michigan 48239 (US)
(74) Representative: Messulam, Alec Moses

(56) References cited:
- EP-A- 0 123 720
- EP-A- 0 194 082
- WO-A-85/00659
- DE-A- 3 515 588
- DE-A- 3 627 227
- DE-A- 3 742 014
- US-A- 4 272 329
- US-A- 4 487 680
- FUNDAMENTALS AND APPLICATIONS OF CHEMICAL SENSORS, 1986, pages 136-154,American Chemical Society; E.M. LOGOTHESIS et al.: "High-temperature oxygen sensors based on electrochemical oxygen pumping"

## Description

This invention relates to a device and method for determining the relative amount of an oxygen containing gas (hereafter called "measurement gas") in a gas mixture comprising at least one other oxygen containing gas, e.g., a humidity sensor for determining the amount of water vapor in air.

Humidity sensors are of considerable usefulness in a variety of applications. For example, humidity sensors have been used for environmental control in computer rooms, commercial aircraft and automobiles. They are also useful in automotive and aircraft systems for carburetion control. A humidity sensitive device is typically structured such that opposing electrodes are formed on an insulating substrate and a humidity sensitive film is formed on the surface of the insulating substrate and at least between the opposing electrodes. The humidity sensitive film comprises a material exhibiting a predetermined humidity-resistance value characteristic. Accordingly, the inherent resistance value of the humidity sensitive film is variable as a function of an ambient humidity and as a result, a humidity condition can be determined in terms of a resistance value of the humidity sensitive device. Exemplary of the humidity sensitive film are organic materials such as cellulose and metal oxides such as aluminum oxide. Exemplary of devices of this type are those disclosed in U.S. Patents Nos. 4,288,775; 4,456,902; and 4,497,701. Unfortunately, however, prior art humidity sensors are less than desirable for automotive use for one or more of the following reasons: poor reliability, lack of durability, complexity and cost.

In the last 20 years, several different types of sensors based on O₂-pumping ZrO₂ cells have been developed. Such oxygen-pumping is based on the fact that if a current is passed through an oxygen ion-conducting electrolyte (e.g., zirconia), oxygen is transferred (pumped) from one side of the electrolyte to the other. The oxygen may come from oxygen gas or gaseous compounds containing oxygen, e.g., H₂O, that are disassociated at the electrolyte. Such sensors have the common characteristic that their signal output is linearly proportional to the partial pressure of the oxygen transferred. As discussed, e.g., in "High Temperature Oxygen Sensors Based on Electrochemical Oxygen Pumping", E. M. Logothetis and R. E. Hetrick, Fundamentals and Applications of Chemical Sensors, 1986, pages 136-154, American Chemical Society, the sensors may be of the single or double cell type.

In single-cell sensors, the same ZrO₂ cell is used for both oxygen pumping and sensing. In double-cell sensors, different ZrO₂ cells are used for oxygen pumping and sensing. U.S. Patent 4,547,281 to Wang is directed to a single cell device capable of sensing the concentration of oxygen in a volume. Double cell sensors capable of sensing the concentration of oxygen in a volume are disclosed, e.g., in U.S. Patents 4,272,329, 4,272,330, and 4,272,331 to Hetrick and Hetrick et al; 4,498,968 to Yamada et al; 4,645,572 to Nishizawa et al; and 4,487,680 to Logothetis et al. The Hetrick, Hetrick et al and Logothetis et al patents are commonly assigned with this invention.

In general, in these two-cell devices, as described for instance in the paper by Logothetis and Hetrick referred to above, a first solid electrochemical oxygen cell having a pair of opposed electrodes is used to pump a certain (variable) quantity of O₂ out of a cavity formed between it and a second similar solid electrochemical oxygen cell, and the second cell (the sensor cell) is used to measure the reduced partial pressure of O₂ inside the cavity. In a modification disclosed in US patent 4 487 680 to Logothetis et al the cavity is eliminated to give a two-cell device with only three electrodes, comprising a generally planar first solid electrochemical oxygen cell including a relatively dense platelet with one of a pair of porous electrodes on each of two spaced sides thereof, a first porous layer deposited on one of the electrodes, and a generally planar second solid electrochemical oxygen cell including a first porous electrode, a second porous layer and a second porous electrode deposited successively on the first porous layer. This device nevertheless operates analogously to those of the Logothetis and Hetrick paper and the US patents 4 272 329, 4 272 330 and 4 272 331 discussed above.

Oxygen sensors based on oxygen-pumping are able to measure the amount of O₂ in a mixture comprising another oxygen containing gas such as H₂O, because oxygen is pumped out at a voltage lower than that required to disassociate the other oxygen containing gas (H₂O). Such prior devices, however, were not able to determine the percentage of H₂O in an O₂/H₂O gas mixture unless the concentration of the other oxygen containing gas is known or its concentration remains fixed. Such prior art devices cannot be used to measure the concentration of H₂O in an O₂/H₂O gas mixture if the amount of O₂ is variable because, if a voltage is applied to a pump cell sufficient to disassociate the H₂O, the O₂ interferes. That is, the O₂ is pumped out at a voltage lower than that required to disassociate H₂O. The concentration which could be determined in this instance would be the combined concentration of O₂ + H₂O. Similarly, in a CO₂/H₂O gas mixture having variable amounts of these gases, the concentration of H₂O can not be determined using the technology of prior art devices because if a voltage is applied across the pump cell sufficient to disassociate the H₂O, the CO₂ would similarly be disassociated. Thus, the concentration which could be determined in this instance would be the combined concentration of CO₂ + H₂O.

It would be desirable to have a device capable of measuring the relative amount of one oxygen containing gas, e.g., CO₂ or H₂O in a gas mixture comprising variable amounts of, e.g., O₂,CO₂,H₂O, and N₂. It would further be desirable if this device had good reliability and were durable for use in automotive applications, i.e., in a high temperature environment, not be complex and be reasonable in cost. The present invention describes a method and device for measuring the relative amount of an oxygen containing gas in a mixture of "interfering " oxygen containing gases which overcomes the deficiencies of prior art devices and is well suited for use as an automotive humidity sensor.

Embodiments of the device of the present invention are similar to the two cell devices in that they comprise two solid electrochemical oxygen pump cells, which may define a cavity between them as described in the Logothetis et al paper or be similar to the structure described in the Logothetis et al US patent 4 487 680, discussed above. The present invention device, however, does not use one cell for oxygen-pumping and the second for oxygen-sensing as in the two cell devices described above. Rather, the invention claimed herein uses both cells as O₂-pumping cells.

Present invention discloses a method and device for measuring the relative amount of only one oxygen containing gas, e.g., only the CO₂ or only the H₂O.

Determination of the relative amount of the combination of two oxygen containing gases, in particular, CO₂ + H₂O, in a gas mixture further comprising oxygen can also be done by the present invention. Advantageously, however, according to embodiments of the present invention the relative amount of a single oxygen containing gas in a gas mixture can be determined, even when the mixture contains variable amounts of each of the gases. Thus, while according to the present invention the relative amount of, e.g., (CO₂ + H₂O) in an O₂, CO₂, and H₂O gas mixture can be determined, advantageously the relative amount of, e.g., CO₂ and the relative amount of H₂O can also be individually determined in a O₂/CO₂/H₂O gas mixture, even if the mixture contains variable amounts of each of the gases.

### Brief Description of the Invention

This invention is directed to an electrochemical oxygen pumping device for measuring the relative amount of a measurement gas consisting essentially of at least one oxygen containing gas in a gas mixture comprising in addition at least a second oxygen containing gas which is capable of being pumped out from the device or disassociated at a voltage less than that which is capable of disassociating the measurement gas. The electrochemical device comprises a first solid electrochemical oxygen pump cell having a first pair of opposed electrodes and a second electrochemical oxygen pump cell having a second pair of opposed electrodes. A supporting structure is coupled to the first and second pump cells to form with them a restricted volume. The device comprises at least one aperture for providing communication between the restricted volume and the gas mixture. The device further comprises a first external electrical circuit means coupled to the first pump cell for applying a first voltage across the first pump cell to negatively bias a first pump cell electrode of the first pair of opposed electrodes inside the restricted volume (i) sufficiently to cause substantially all the second oxygen containing gas molecules inside the restricted volume to be pumped out from the restricted volume or disassociated by a current flowing through the first pump cell and (ii) insufficiently disassociate the measurement gas. The device also comprises a second external electrical circuit means coupled to the second pump cell for applying a second voltage across the second pump cell to negatively bias a second pump cell electrode of the second pair of opposed electrodes inside the volume sufficiently to disassociate only substantially all the measurement gas inside the restricted volume by a current flowing through the second pump cell. Additionally, the device comprises a third external electrical circuit means coupled to the second pump cell to measure the current flowing through the second pump cell, the second pump cell current being proportional to the relative amount of the measurement gas in the gas mixture.

This invention is thus capable of measuring the relative amount of one oxygen containing gas in a gas mixture containing at least one other oxygen containing gas. This invention is also capable of measuring the total relative amount of two or more oxygen containing gases in a gas mixture containing at least one other oxygen containing gas. Herein "measurement gas" may be used to denote one or more such gases whose relative amount is being measured.

According to another aspect of the invention, a method is disclosed herein using the electrochemical oxygen pumping device disclosed above for measuring the relative amount of measurement gas in a gas mixture, which gas mixture has been described above. The method comprises providing communication between the gas mixture and the restricted volume of the electrochemical device and applying a first voltage across the first pump cell to negatively bias a first pump cell electrode of the first pair of opposed electrodes inside the restricted volume (i) sufficiently to cause substantially all the second oxygen containing gas molecules inside the restricted volume to be pumped out from the restricted volume or disassociated by a current flowing through the first pump cell and (ii) insufficiently to disassociate the measurement gas. The method further comprises applying a second voltage across the second pump cell to negatively bias a second pump cell electrode of the second pair of opposed electrodes inside the restricted volume sufficiently to disassociate only substantially all the measurement gas inside the restricted volume by a current flowing through the second pump cell. That is, the second voltage is sufficient to disassociate the measurement gas but is less than that capable of disassociating oxygen containing gases which require a higher voltage for their disassociation. The method also comprises measuring the current flowing through the second pump cell, the second pump cell current being proportional to the relative amount of the measurement gas in the gas mixture.

This invention in another aspect is directed to an electrochemical oxygen pumping device for measuring the relative amount of a measurement gas consisting essentially of at least one oxygen containing gas in a gas mixture comprising in addition at least a second oxygen containing gas which is capable of being pumped out of the device or disassociated at a voltage less than that which is capable of disassociating the measurement gas. This electrochemical device comprises a generally planar first solid electrochemical oxygen pump cell including a relatively dense platelet with one of a pair of porous electrodes on each of two spaced sides of the platelet; a first porous layer deposited on one electrode of the first pump cell; a generally planar second solid electrochemical oxygen pump cell including a first porous electrode, a second porous layer and a second porous electrode deposited successively on the first porous layer; a second cell external electrical circuit means coupled to the second pump cell for applying a first voltage across the second pump cell to positively bias the second electrode (i) sufficiently to cause substantially all the second oxygen containing gas molecules inside the first porous layer to be pumped out or disassociated by a current flowing through the second pump cell and (ii) insufficiently to disassociate the measurement gas; a first cell external electrical circuit means coupled to the first pump cell for applying a second voltage across the first pump cell to positively bias the exposed electrode of the first pump cell sufficiently to disassociate only substantially all of the measurement gas molecules inside the first porous layer; and a third external electrical circuit means coupled to the first pump cell to measure the current flowing through the first pump cell, the current being proportional to the relative amount of the measurement gas in said gas mixture. This device may be termed herein as a "planar electrochemical device".

According to yet another aspect of the invention, it is directed to a method of using the planar electrochemical device disclosed above to measure the relative amount of a measurement gas in a gas mixture, which gas mixture has been described above. The method comprises providing communication between the gas mixture and the first porous layer of the planar electrochemical device, applying a first voltage across the second oxygen pump cell to positively bias the second electrode (i) sufficiently to cause substantially all the second oxygen containing gas molecules inside the first porous layer to be pumped out or disassociated by a current flowing through the second pump cell and (ii) insufficiently to disassociate the measurement gas; applying a second voltage across the first oxygen pump cell to positively bias the exposed electrode of the first pump cell sufficiently to disassociate only substantially all of the measurement gas molecules inside the first porous layer; and measuring the current flowing through the first pump cell, the current being proportional to the relative amount of the measurement gas in the gas mixture.

According to one embodiment of this invention, the device (in any of the aspects disclosed above) can be used as a humidity sensor for any gas mixture containing at least H₂O and another oxygen containing gas. When used as a humidity sensor, the device and method determine the relative amount of water vapor (absolute humidity) in the gas mixture, e.g., air. Relative humidity can be determined by also employing a thermistor to measure the temperature. According to another aspect of this invention, the relative amount of H₂O gas in an exhaust gas/intake air mixture of an internal combustion engine can be determined and used as a measure of EGR in the mixture, i.e., the device could function as an EGR sensor. A correction for the humidity in the air could be made by using the device to measure the H₂O for zero EGR, i.e., as a humidity sensor for the intake air. Still other aspects of the invention will be apparent in view of the detailed disclosure below.

The device and method of this invention can be used in a continuous way (i.e., to continuously monitor the relative amount of an individual gas or a combination of gases in a gas mixture) or in an intermittent (sampling) way. That is, the values of the appropriate individual voltages across the first and second pump cells may be maintained for an extended period of time during which it is desired to continuously measure the relative amount of the measurement gas in the restricted volume, e.g., the humidity in air during the entire operation of an automobile. On the other hand, the determination of the relative amount of the measurement gas need not be done continuously. Measurement of e.g., the humidity of air, can be done on a periodic basis. If it is desired to determine the concentration of CO₂ in the air and also to determine the humidity of the same air sample, the voltages across the first and second pump cells would be alternated, first to that combination which will allow measurement of the CO₂ in the air sample (which will be described hereafter in greater detail) and then to that combination which will allow measurement of the humidity (H₂O) in the air (as also will be described in greater detail hereafter). In either case, the measurement of the current across the second pump cell would take place during the time the electrodes are energized, as will be apparent to those skilled in the art in view of the present disclosure.

The device of the present invention when used, e.g., as a humidity sensor, has characteristics which offer advantages over prior art humidity sensors. For example, it provides stable operation since the components are not subject to the ageing characteristics of e.g., Al₂O₃, whose capacitance and resistivity change with time.

The invention will now be described further, by way of example, with reference to the accompanying drawings, in which :

Figure 1 is a schematic of an electrochemical device for measuring the relative amount of a measurement gas in a gas mixture according to one embodiment of the present invention.

Figure 2 is a graph relating the relative amount of H₂O in a combined intake air and exhaust mixture to the relative amount of EGR.

Figure 3 is a graph showing the output of the measurement gas sensor according to the embodiment of the present invention shown in Figure 1 as a function of EGR.

Figure 4A is a schematic of a single-cell oxygen pumping device according to the prior art.

Figure 4B is a graph showing the relation between the pumping current and the pumping voltage of the oxygen pumping device of Figure 4A in O₂/N₂ gas mixtures.

Figure 4C is a graph showing the relation between the pumping current and the pumping voltage of the oxygen pumping device of Figure 4A in CO₂/N₂ gas mixtures.

Figure 4D is a graph showing the relation between the pumping current and the pumping voltage of the oxygen pumping device of Figure 4A in O₂/CO₂/N₂ gas mixtures.

Figure 5 is a graph showing the relation between the pumping current and the pumping voltage of the prior art oxygen pumping device of Figure 4A in O₂/H₂O gas mixtures.

Figure 6 is a graph showing the relation between the pumping current and the pumping voltage of the present invention oxygen pumping device of Figure 1 in O₂/H₂O gas mixtures.

Figure 7 is a schematic of an electrochemical device for measuring the relative amount of a measurement gas in a gas mixture according to a second embodiment of the present invention.

Figure 8A and 88 are schematics of electrochemical devices for measuring the relative amount of a measurement gas in a gas mixture according to other embodiments of the present invention.

Figure 9 is a schematic of an electrochemical device having a planar configuration for measuring the relative amount of a measurement gas in a gas mixture according to another embodiment of the present invention.

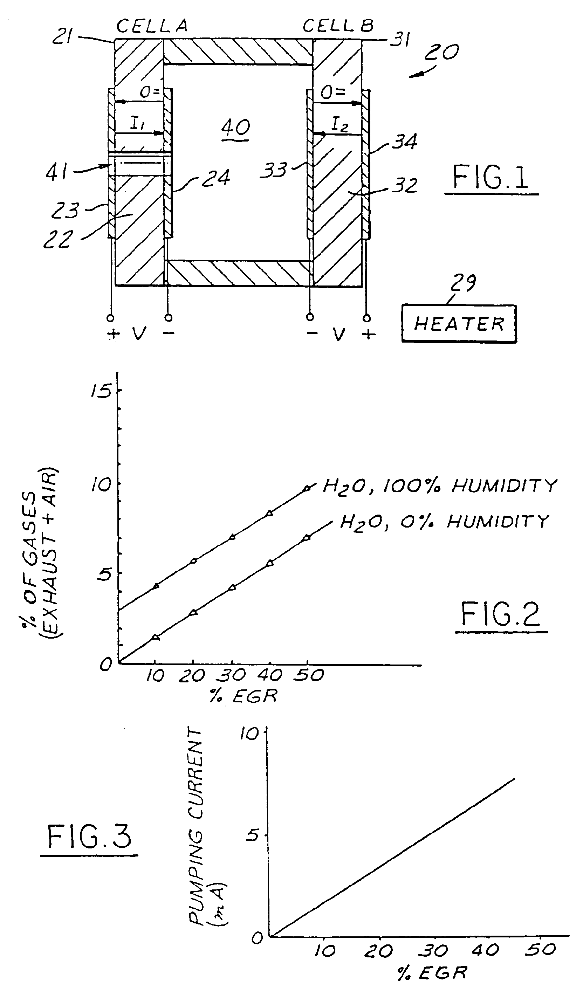

This invention is directed to an electrochemical oxygen pumping device and method for determining the relative amount of a measurement gas consisting essentially of at least one oxygen containing gas in a gas mixture comprising in addition at least a second oxygen containing gas which is capable of being pumped out of the device or disassociated at a voltage less than that which is capable of disassociating the measurement gas. One embodiment of the device is shown in Figure 1. This device 20 has two electrochemical cells 21 and 31 arranged with a supporting structure so that a restricted volume 40 is defined. Volume 40 communicates with a gas mixture (e.g., O₂, H₂, and H₂O) through at least one aperture 41. Each of the two cells consists of a platelet 22, 32 made from an oxygen ion conducting solid electrolyte such as ZrO₂, and two electrodes 23, 24, 33, 34 applied on the two sides of the platelets. These electrodes are made from platinum or some other material according to procedures well established in the area of oxygen sensors. Electrochemical cells 21 and 31 are operated as oxygen pumps having currents I₁ and I₂ passing through them when appropriate voltages are applied across each cell. Advantageously, a heater 29 is positioned adjacent sensor 20 to provide an elevated temperature of about at least 500°C suitable for operation of sensor 20.

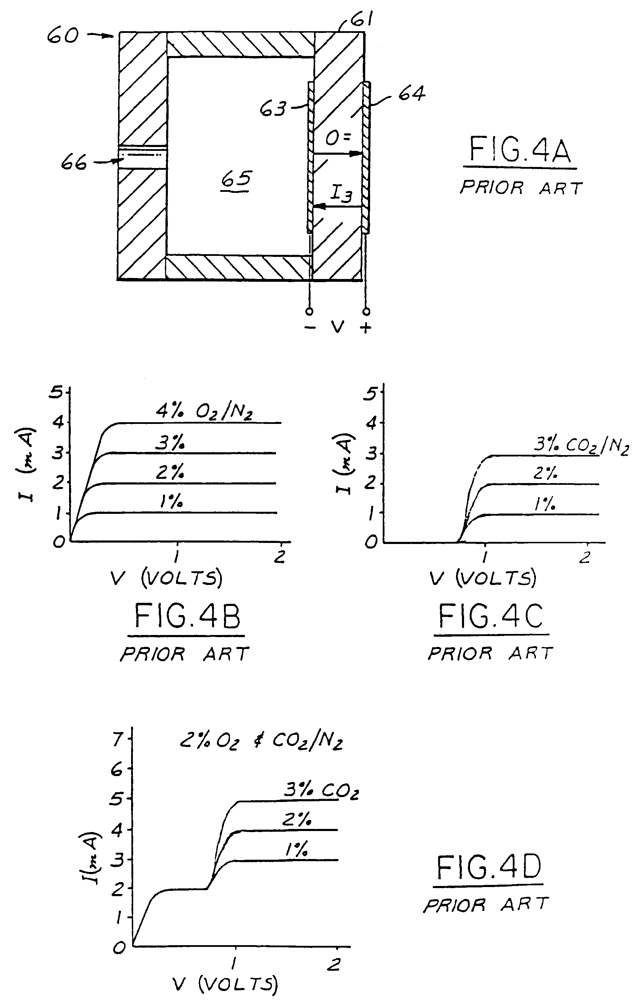

In order to more fully understand the operation of device 20, first consider a single ZrO₂ device 60 of Figure 4A well known in the art for use in sensing oxygen gas (O₂) percentage in the intake air/exhaust mixture of internal combustion engines. Operation of this prior art type of device is based on oxygen pumping. It has a single ZrO₂ cell 61 made from a ZrO₂ platelet with two platinum electrodes 63 and 64 arranged in a structure so that a volume 65 is defined. Volume 65 communicates with a gas mixture comprising O₂, e.g., an intake air/exhaust gas mixture of an internal combustion engine, through an aperture 66. When a voltage is applied across cell 61 so that electrode 63 is negative, a current I₃ passes through the ZrO₂ material as a result of a motion of oxygen ions from electrode 63 to electrode 64.

As the oxygen ions formed at electrode 63 travel through the ZrO₂ platelet to electrode 64, more O₂ molecules from the gas phase disassociate and react with electrons at electrode 63 to form oxygen ions (O⁼). By means of this electrochemical reaction, as oxygen ions are depleted at electrode 63 (in traveling to electrode 64) more oxygen ions are formed from O₂ gas molecules in volume 65. By means of an inverse electrochemical reaction, oxygen ions at electrode 64 are released as O₂ molecules into the ambient gas. The net effect of the current through the cell is to pump O₂ out of volume 65. Because of the lower concentration of O₂ inside volume 65, there will be a diffusional flux of O₂ from the gas mixture (e.g., intake air/exhaust gas mixture) into volume 65 through aperture 66. Under steady state conditions, the diffusional flux of O₂ into volume 65 will be equal to the flux of O₂ pumped out of volume 65 by the pumping current.

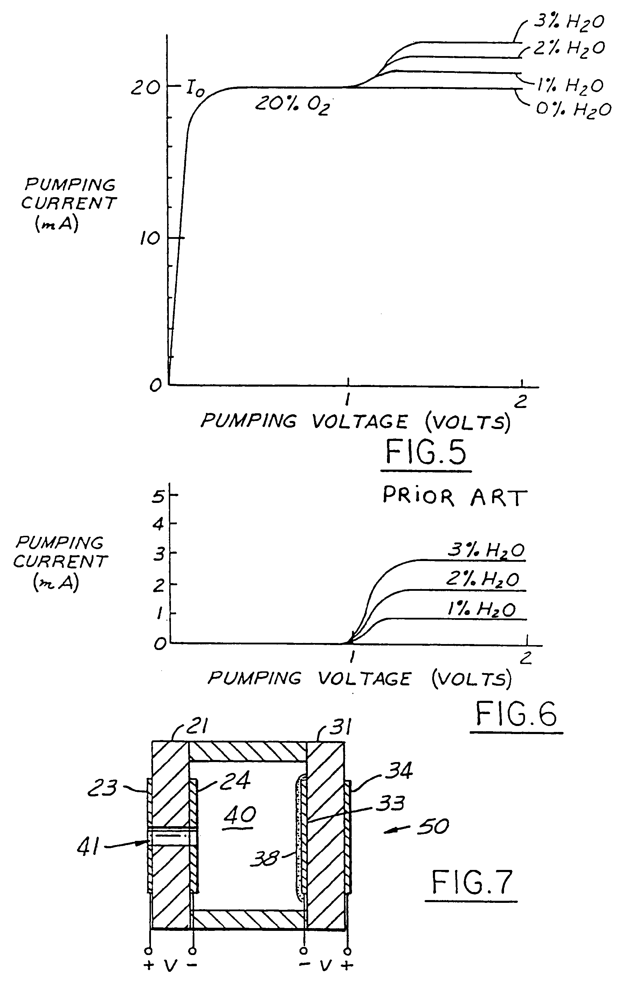

In an O₂/N₂ mixture, the current voltage (I-V) characteristic of prior art device 60 is shown in Figure 4B. For small voltages, the current increases with voltage as more oxygen is pumped out of volume 65. For sufficiently large voltages, the pumping current saturates. This corresponds to the condition that all oxygen inside volume 65 is pumped out by the current. The saturation current Iₛ is proportional to the relative amount of O₂ in the ambient. Figure 4C shows the I-V characteristic of sensor 60 in a CO₂ and N₂ mixture. Because of the lack of oxygen, the pumping current is zero for low voltages. Above a threshold value of about 0.7 volts, the pumping current increases with voltage due to electrodisassociation of CO₂. For still higher voltages, saturation currents are again observed corresponding to the disassociation of all CO₂ inside volume 65. The saturation current is proportional to the relative amount of CO₂ in the gas. A similar I-V characteristic is obtained with H₂O/N₂ mixtures except that the threshold voltage for the disassociation of H₂O is somewhat larger (about 1.1 volt). It is apparent that the prior art device of Figure 4A can be used to measure the total concentration of oxygen containing gases, e.g., O₂, H₂O, and CO₂, in a gas mixture additionally containing inert gases (i.e., non-oxygen containing gases), e.g. N₂. This can be done by applying a sufficiently large voltage to achieve complete disassociation of all of the oxygen containing gases. Figure 4D shows the I-V characteristic of prior art device 60 in O₂, CO₂, and N₂ gas mixtures, in particular for a mixture containing a fixed concentration of O₂ (2%) and variable concentrations of CO₂. The saturation current observed at lower voltages (V<1 volt) corresponds to the complete removal of O₂ from inside volume 65; the saturation current obtained at the higher voltage (V>1.1 volts) is proportional to the concentration of O₂ plus CO₂ in the mixture. Figure 5 shows the I-V characteristics of prior art device 60 in gas mixtures comprising a fixed concentration of O₂ (20%) and variable amounts of H₂O as may be present in air. The saturation current Iₛ is proportional to the concentration of O₂ plus H₂O in the mixture. However, since the concentration of the O₂ remains fixed, the relative amount of the H₂O in the gas mixture could be determined from the value of the saturation current, whose variation would be due then to the varying concentration of the H₂O as seen in Figure 5. Toshio Usui and Yoichi Kurumiya in "Humidity Sensing Properties Of The Limiting Current Type Oxygen Sensor", Transducers ′87, pp. 701-704, disclose an oxygen sensor of the single-cell ZrO₂ type similar to prior art device 60 shown in figure 4A. This reference discloses I-V characteristics for gas mixtures of O₂, N₂ and O₂, and H₂O.

Device 60 of Figure 4A cannot be used, however, to determine the relative amount of one oxygen containing gas, such as H₂O, in a gas mixture containing at least one other oxygen containing gas, such as O₂, when a variable amount of O₂ exists in the gas mixture. In such a situation, the saturation current would be proportional to the total concentration of O₂ + H₂O. Since both concentrations are variable, using such a prior art device, one could not determine what proportion of the saturation current was due to each gas individually.

The measurement of the relative amount of a gas, e.g., H₂O, in a mixture comprising at least one other oxygen containing gas, e.g., O₂ can be accomplished, however, with device 20 of Figure 1, an embodiment of the present invention. For a gas mixture consisting essentially of O₂, H₂O, a constant voltage of less than 0.8 volts, and advantageously in the range of 0.2 to 0.8 volts, is applied across cell 21 so that electrode 24 is negative to pump all O₂ out of volume 40. A second constant voltage larger than about 1.0 volts, and advantageously in the range of 1.2 to 2.0 volts is applied across cell 31 so that electrode 33 is negative to disassociate all H₂O inside volume 40. The current I₂ through cell 31 is proportional to the H₂O concentration in the gas mixture. If the gas mixture were to comprise O₂, CO₂, and H₂O and it were desired to again measure the H₂O concentration, a constant voltage greater than 0.7 volts but less than about 1.0 volts (i.e. the voltage necessary to pump out all O₂ and disassociate all CO₂ without disassociating H₂O) would be applied across cell 21 with electrode 24 being made the negative electrode. A second constant voltage larger than about 1.0 volts, and advantageously in the range of 1.3 to 2.0 volts, is applied across cell 31 so that electrode 33 is negative to disassociate all the H₂0 in the volume 40. The current I₂ through cell 31 is proportional to the H₂O concentration in the gas mixture.

As described above, the gas mixture comprises at least two oxygen containing gases. The oxygen containing gases can be selected from the group consisting essentially of oxygen, O₂, and oxygen containing gas compounds such as NO₂, CO₂, H₂O, SO₂, CO, etc. Exemplary of gas mixtures which may be employed according to the invention are O₂ and H₂O; O₂, H₂ and H₂O; H₂O and CO_{2;} H₂O, CO₂, N₂ and CO; O₂, CO₂ and H₂O; 0₂, N₂ and H₂O; 0₂, N₂ and CO₂; 0₂ and CO₂, air; and the like. Still other gas mixtures which may be employed in the present invention device and method will be apparent to those skilled in the art in view of the present disclosure.

If the gas mixture employed in the invention is selected from a gas mixture comprising H₂O in addition to at least one other oxygen containing gas, the device can function as a humidity sensor. That is, the device can be used to determine the relative amount of water vapor (H₂O) in the gas mixture. During practice of the invention, oxygen containing gases which can be pumped out of the device or disassociated at a voltage lower than that required to disassociate any measurement gas, e.g., H₂O, will be pumped out or disassociated by first pump cell 21. Accordingly, in the first six gas mixtures disclosed in the previous paragraph, if the device is used to measure humidity, the following gases will be respectively pumped out or disassociated at first pump cell 21 : O₂; O₂; CO₂; CO and CO₂; O₂ and CO₂; and O₂. Since, according to the invention the measurement gas is disassociated by the second cell, in these mixtures, the voltage applied across second pump cell 31 would be that sufficient to disassociate substantially all of the H₂O molecules. As mentioned above, the humidity (H₂O content) of air as measured by the present device is the absolute humidity. Relative humidity can be determined by further employing a thermistor to measure the temperature.

Should it be desired to measure, e.g., CO₂ in a O₂, CO₂ and H₂O gas mixture, a voltage sufficient to pump out O₂ at first pump cell 21 would be applied and a voltage sufficient to disassociate CO₂ (but less than that which will disassociate H₂O) would be applied across the second pump cell 31. The device may be employed, e.g., to maintain a desired relative amount of CO₂ in a controlled environment. Should it be desired to determine the amount of CO₂ + H₂O in this gas mixture, a voltage would be applied across first pump cell 21 sufficient to pump out substantially all O₂ and a higher voltage, sufficient to disassociate both the CO₂ and H₂O, would be applied across second pump cell 31.

As disclosed above, the present invention device is capable of measuring the relative amount of a measurement gas in a gas mixture. The measurement gas whose concentration is measured according to the present invention can be one or more gases selected from the gas mixture which can be disassociated at second pump cell 31 at a voltage greater than that at which the second oxygen containing gas can be pumped out or disassociated at the first pump cell 21. The second oxygen containing gas pumped out or disassociated at pump cell 21 can be one or more gases. If only one second oxygen containing gas is removed at pump cell 21 and should it be desired to additionally measure the concentration of this gas, e.g., the O₂ concentration in an O₂, CO₂, H₂O gas mixture, currently available oxygen sensors could be used. Alternately, according to another embodiment of this invention, the sensor of this invention could be used as described above with the addition that the pumping current I₁ through cell 21 is also measured by suitable circuitry connected across cell 21. In this case I₁ is proportional to the O₂ concentration. According to yet another embodiment of this invention, the sensor of this invention could be used to measure the concentration of the gas removed at cell 21 by applying voltage, V=0, across first pump cell 21 and then applying across second pump cell 31 a voltage sufficient to pump out the O₂, but less than that which will disassociate any other oxygen containing gases (CO₂, H₂O). The current generated across cell 31 being proportional to the concentration of O₂. In effect, using the present invention device in this second way converts it, for a time, to a single cell oxygen sensor.

Similarly, in a CO₂, H₂O gas mixture, according to the present invention, CO₂ would be disassociated at first pump cell 21 and the H₂O would be disassociated and its concentration measured at second pump cell 31. Should it be desired to additionally measure the concentration of CO₂, known oxygen sensors could be employed as described above. Alternately, according to another embodiment of this invention, the sensor of this invention could be used with the addition that the pumping current I₁ through cell 21 is also measured. In this case, I₁ is proportional to the CO₂ concentration. According to still another embodiment of this invention, the sensor of this invention could be used to measure the concentration of the CO₂ gas removed at cell 21 by applying voltage, V=0, across first pump cell 21 and applying a voltage across second pump cell 31 sufficient to disassociate CO₂ but less than that which will disassociate H₂O. While the discussions of this and the prior paragraph for measuring the concentration of the gas removed at pump cell 21 have been directed to device 20, it will be apparent to those skilled in the art in view of the present disclosure that this techniques can be similarly applied to the planar device of this invention.

If the O₂, CO₂ and H₂O mixture is an exhaust gas/intake air mixture of an internal combustion engine, this invention can be used to determine the EGR based on the relative amount of H₂O in the exhaust gas/intake air mixture. As is known in the art, for an engine controlled at the stoichiometric air-to-fuel ratio, the relative amount of H₂O in the exhaust gas is constant for constant humidity in the air. For example, for a fuel with hydrogen-to-carbon ratio of about 2.3 (stoichiometric A/F value equal to 14.7), the relative amount of H₂O in the exhaust gas at A/F=14.7 is about 13% by volume. Figure 2 shows the relative amount of H₂O in the combined exhaust gas/intake air mixture as a function of the relative amount of EGR. Figure shows the output (pumping current of of cell 31) of sensor 20 as a function of EGR. The effect of humidity in the air is indicated by showing plots for 0% and 100% humidity at a temperature of 21°C (70°F). It is apparent that the relative amount of H₂O in the combined exhaust gas/intake air depends appreciably on humidity. The effect of humidity normally present in air can be eliminated by measuring the H₂O for zero EGR (completely closed EGR valve), i.e., by using the device to measure the relative amount of water vapor in the air. Alternately, a second (separate) device of this type could be used to measure the relative amount of water vapor in the air in order to correct for the ambient water vapor and thus accurately determine EGR based on the relative amount of H₂O in the exhaust gas/intake air mixture.

As disclosed above, this invention is capable of measuring the relative amount of a measurement gas consisting essentially of at least one oxygen containing gas in a gas mixture comprising in addition at least a second oxygen containing gas which is capable of being pumped out of the device or disassociated at a voltage less than that which is capable of disassociating the measurement gas. Accordingly, in a gas mixture containing O₂, A, B, and C (A, B and C being oxygen containing gases) and if O₂ can be pumped out at a voltage lower than that capable of disassociating A, B, and C, the relative amount of each of A, B and C in the gas mixture can individually be measured. In addition, also as disclosed above, this invention is capable of measuring the total relative amount of two or more oxygen containing gases (also termed "measurement gas") in a gas mixture containing at least a second (i.e., one additional) oxygen containing gas. For the sake of explanation, let us assume that gas A disassociates above 1.3 volts, that gas B disassociates above 1.9 volts and that gas C disassociates above 2.3 volts. According to an embodiment of this invention, in order to measure the total concentration of gases A + B, a voltage of about 0.8 volts is applied across cell 21 (electrode 24 being negative) to pump out all O₂ from volume 40 and a voltage of 2.2 volts is applied across cell 31 (electrode 33 being negative) to disassociate all A and B (but not C) gas molecules in volume 40. The saturation current of cell 31 would be proportional to the concentration of A plus B in the mixture. In this case, O₂ would be considered the second oxygen containing gas and A plus B would be considered the measurement gas. Similarly, the total concentration of A + B + C would be determined by applying a voltage of about 0.8 volts across cell 21 and a voltage of, for example, 2.6 volts across cell 31. To measure the total relative amount of B + C in the gas mixture a voltage in the range of 1.3-1.8 volts is applied across cell 21 to remove O₂ and disassociate all A gas molecules in volume 40 and a voltage of, for example, 2.6 volts is applied across cell 31 to disassociate all B and C molecules in volume 40. The saturation current across cell 31 would be proportional to the concentration of B plus C in the mixture. In this latter case, B plus C would be the measurement gas and O₂ plus A would be the second oxygen containing gas. The voltage at which each of the oxygen containing gases in a mixture disassociate can be obtained by scanning the voltages as would be apparent to one skilled in the art in view of the present disclosure. Effective use of the invention to measure a measurement gas, individually or in total, would depend in part on the difference between the voltages applied across the two cells. If the difference is very small, measurement of the gas would be less effective, i.e., it is more difficult to separate the gases at each of the electrodes. Other factors which influence the effective use of the invention include factors such as type of electrode material (fast electrode processes), physical state (microstructure) of the electrodes, and the geometry of the device. The techniques described herein for measuring the relative amount of, e.g., B plus C in the mixture are similarly applicable to the planar device disclosed herein as would be apparent to one skilled in the art in view of the present disclosure.

The device and method of this invention (including the aspects disclosed herein directed to the planar device and method) can be used in a continuous way (i.e., to continuously monitor the relative amount of an individual gas or a combination of gases in a gas mixture) or in an intermittent (sampling) way. That is, the values of the appropriate individual voltages across the first and second pump cell may be maintained for an extended period of time during which it is desired to measure the relative amount of the measurement gas in the restricted volume, e.g., the humidity in air during the entire operation of an automobile. On the other hand, the determination of one gas need not be done continuously. Measurement of e.g., the humidity of air can be done on a periodic (intermittent) basis. If it is desired to determine the individual concentration of two or more gases in a gas mixture, e.g., the concentration of CO₂ in air and also the humidity of the same air sample, the voltages across the first and second pump cells would be alternated, first to that combination which will allow measurement of the CO₂ in the air sample (as has been described above) and then to that combination which will allow measurement of the humidity (H₂O) in the air (as also has been described above). In the same way, the present invention is capable of measuring the concentration of one oxygen containing gas and also the total of two or more of the oxygen containing gases in the gas mixture. Numerous ways of applying the invention to measure the relative amount of oxygen containing gas in a gas mixture will be apparent to those skilled in the art in view of the present disclosure.

The device of Figure 1 operates under the assumption that cell 21 can pump all oxygen entering volume 40 through aperture 41 so that only a measurement gas reaches cell 31, (since aperture 41 is in close proximity to electrode 24 and remote with respect to electrode 33). If this is not the case with the configuration of Figure 1, the desired condition can be accomplished by modifying the device structure 50 as shown in Figure 7. In this structure, a porous layer 38 is deposited on top of the inner electrode of cell 31. This porous layer is made from ZrO₂ or an inert material (e.g. spinel or aluminum oxide) and acts as a barrier to O₂ diffusion so that all O₂ is pumped out by cell 21.

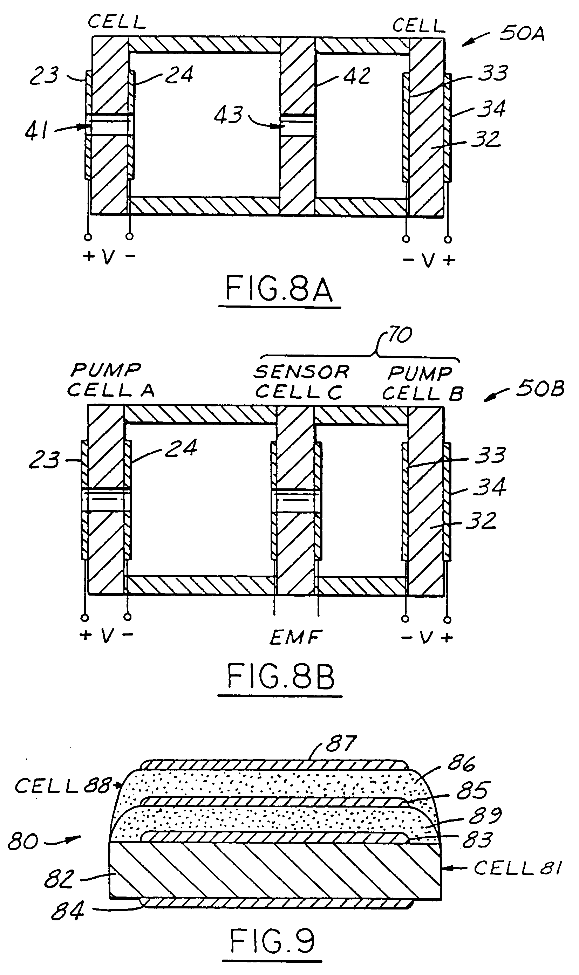

Several other device configurations are possible. According to other embodiments of this invention, the two pumping cells are more strongly decoupled by placing between them barriers to oxygen diffusion. For example, the porous layer in the device of Figure 7 may be replaced with a "wall" 42 having an aperture 43 as shown in device 50A of Figure 8A. Another type of configuration is shown in device 50B of Figure 8B. Device 50B uses a pump cell to remove the O₂ or decompose oxygen containing gases other than the measurement gas and a pump cell/sensor cell structure 70 (similar to the sensor structure described in U.S. 4,272,329 by Hetrick et al) to measure the measurement gas.

As disclosed above, the electrochemical device for determining relative amount of the measurement gas can also be made in a planar configuration. Figure 9 shows one embodiment of a planar device 80 according to this invention. One starts with a dense platelet 82 and deposits porous electrodes 83 and 84 on both sides of platelet 82 to form a first oxygen pump cell 81. Platelet 82 is made from an oxygen ion conducting solid electrolyte such as ZrO₂. The electrodes are made of platinum or some other material according to procedures well established in the area of oxygen sensors. A first porous layer 89 made of ZrO₂ or an inert material such as spinel or alumina is deposited on top of electrode 83 to form a barrier to diffusion of O₂ molecules. A first porous electrode 85 is deposited on first porous layer 89 followed by another porous layer 86 made from an oxygen ion conducting electrolyte such as ZrO₂.
Finally, a second porous electrode 87 is deposited on top of second porous layer 86. Porous layer 86 and electrodes 85 and 87 form second pump cell 88. The gas mixture communicates with the first porous layer 89, by means of, for example diffusion of the gas mixture into porous layer 89 through its sides. The sides may be exposed or covered with porous electrode material through which the gas mixture may diffuse into the first porous layer 89. The gas mixture may also communicate with the first porous layer 89 by diffusion of the gas mixture into second porous layer 86 and subsequently diffusion of the gas mixture through first porous electrode 85 into first porous layer 89.

An appropriate voltage is applied across second pump cell 88, the second electrode 87 being biased positively, to pump out or decompose oxygen containing gases which can be pumped out or disassociated at voltages lower than that which decompose the measurement gas. This voltage is less than that which is capable of disassociating the measurement gas in the porous parts of the structure. An appropriate voltage is applied across first pump cell 81 to completely disassociate only all of the measurement gas inside the porous layer 89. The saturation current of pump cell 81 is proportional to the relative amount of measurement gas in the gas mixture.

## Claims

1. An electrochemical oxygen pumping device for measuring the relative amount of a measurement gas consisting essentially of at least one oxygen containing gas in a gas mixture comprising in addition at least a second oxygen containing gas which is capable of being pumped out of said device or disassociated at a voltage less than that which is capable of disassociating said measurement gas, said device comprising, a first solid electrochemical oxygen pump cell (21) having a first pair of opposed electrodes (23,24), a second solid electrochemical oxygen pump cell (31) having a second pair of opposed electrodes (33,34), a supporting structure coupled to said first and second pump cells to form with them a restricted volume (40), at least one aperture (41) for providing communication between said restricted volume (40) and said gas mixture, a first external electrical circuit means coupled to said first pump cell (21) for applying a first voltage across said first pump cell to negatively bias a first pump cell electrode (24) of said first pair of opposed electrodes inside said restricted volume (i) sufficiently to cause substantially all said second oxygen containing gas molecules inside said restricted volume to be pumped out from said restricted volume (40) or disassociated by a current flowing through said first pump cell and (ii) insufficiently to disassociate said measurement gas, a second external electrical circuit means coupled to said second pump cell (31) for applying a second voltage across said second pump cell to negatively bias a second pump cell electrode (33) of said second pair of opposed electrodes inside said volume sufficiently to disassociate only substantially all said measurement gas inside said restricted volume by a current flowing through said second pump cell, and a third external electrical circuit means coupled to said second pump cell (31) to measure said current flowing through said second pump cell, said second pump cell current being proportional to the relative amount of said measurement gas in said gas mixture.

2. An electrochemical device as claimed in claim 1, further comprising a porous layer (38) deposited on top of said second pump cell electrode (33) located inside said volume (40).

3. An electrochemical device as claimed in claim 1, further comprising a wall (42) inside said volume (40), said wall dividing said volume into two compartments which communicate with each other through an aperture (43) in said wall.

4. An electrochemical oxygen pumping device for measuring the relative amount of a measurement gas consisting essentially of at least one oxygen containing gas in a gas mixture comprising in addition at least a second oxygen containing gas which is capable of being pumped out of said device or disassociated at a voltage less than that which is capable of disassociating said measurement gas, said electrochemical device including, a generally planar first solid electrochemical oxygen pump cell (81) including a relatively dense platelet (82) with one of a pair of porous electrodes (83,84) on each of two spaced sides of said platelet, a first porous layer (89) deposited on one electrode (83) of said first pump cell, a generally planar second solid electrochemical oxygen pump cell (88) including a first porous electrode (85), a second porous layer (86) and a second porous electrode (87) deposited successively on said first porous layer, a first external electrical circuit means coupled to said second pump cell (88) for applying a first voltage across said second pump cell to positively bias said second electrode (87) (i) sufficiently to cause substantially all said second oxygen containing gas molecules inside said first porous layer (89) to be pumped out or disassociated by a current flowing through said second pump cell and (ii) insufficiently to disassociate said measurement gas, a second external electrical circuit means coupled to said first pump cell (81) for applying a second voltage across said first pump cell to positively bias the exposed electrode (84) of said first pump cell sufficiently to disassociate only substantially all of said measurement gas molecules inside said first porous layer (89); and a third external electrical circuit means coupled to said first pump cell to measure said current flowing through said first pump cell, said current being proportional to the relative amount of said measurement gas in said gas mixture.

5. An electrochemical device as claimed in any preceding claim wherein said first and second external circuit means are adapted to apply said first and second voltages, respectively, in modes independently selected from (i) continuous and (ii) intermittent.

6. An electrochemical device as claimed in any preceding claim, wherein said third external electrical circuit means is adapted to measure said current in modes independently selected from (i) continuous and (ii) intermittent.

7. An electrochemical device as claimed in any preceding claim, further including a heater (29) to maintain the temperature of the device above at least about 500°C.

8. An electrochemical device as claimed in claim 1 or 2, wherein said gas mixture is air, said measurement gas is H₂O and said first external circuit means is adapted to apply a first voltage across its associated pump cell in the range of about 0.2 to 1.0 volts.

9. An electrochemical device as claimed in claim 8, wherein said second external circuit means is adapted to apply a second voltage across its associated pump cell in the range of about 1.3 to 2.0 volts.

10. A method employing an electrochemical oxygen pumping device as claimed in any of claims 1-3 for measuring the relative amount of a measurement gas consisting essentially of at least one oxygen containing gas in a gas mixture comprising in addition at least a second oxygen containing gas which is capable of being pumped out of said device or disassociated at a voltage less than that which is capable of disassociating said measurement gas, said method comprising the steps of, providing communication between said gas mixture and a restricted volume (40) of said device, which comprises applying a first voltage across said first pump cell (21) to negatively bias a first pump cell electrode (24) of said first pair of opposed electrodes (23,24) inside said restricted volume (i) sufficiently to cause substantially all said second oxygen containing gas molecules inside said restricted volume to be pumped out from said restricted volume or disassociated by a current flowing through said first pump cell and (ii) insufficiently to disassociate the measurement gas, applying a second voltage across said second pump cell (31) to negatively bias a second pump cell electrode (33) of said second pair of opposed electrodes (33,34) inside said restricted volume sufficiently to disassociate only substantially all said measurement gas inside said restricted volume by a current flowing through said second pump cell, measuring said current flowing through said second pump cell (31), said second pump cell current being proportional to the relative amount of said measurement gas in said gas mixture.

11. A method employing an electrochemical oxygen pumping device as claimed in claim 4 for measuring the relative amount of a measurement gas consisting essentially of at least one oxygen containing gas in a gas mixture comprising in addition at least a second oxygen containing gas which is capable of being pumped out of said device or disassociated at a voltage less than that which is capable of disassociating said measurement gas, said method comprising the steps of, providing communication between said gas mixture and a first porous layer (89) of said planar electrochemical device, applying a first voltage across said second pump cell (88) to positively bias said second electrode (87) (i) sufficiently to cause substantially all said second oxygen containing gas molecules inside said first porous layer (89) to be pumped out or disassociated by a current flowing through said second pump cell and (ii) insufficiently to disassociate said measurement gas, applying a second voltage across said first pump cell (81) to positively bias the exposed electrode (84) of said first pump cell sufficiently to disassociate only substantially all of said measurement gas molecules inside said first porous layer (89), and measuring said current flowing through said first pump cell, said current being proportional to the relative amount of said measurement gas in said gas mixture.

12. A method as claimed in claim 10 or 11, wherein said first and second external voltages are applied in modes independently selected from (i) continuous and (ii) intermittent.

13. A method as claimed in claim 12, wherein said current is measured in modes independently selected from (i) continuous and (ii) intermittent.

## Patentansprüche

1. Elektrochemische Sauerstoffpumpvorrichtung zur Messung des relativen Anteils eines im wesentlichen aus wenigstens einem sauerstoffhaltigen Gas bestehenden Meßgases in einem Gasgemisch mit zusätzlich wenigstens einem zweiten sauerstoffhaltigen Gas, das bei einer Spannung aus der besagten Vorrichtung herausgepumpt werden kann oder dissoziieren kann, die kleiner ist als die Spannung, bei welcher das besagte Meßgas dissoziiert, wobei besagte Vorrichtung eine erste elektrochemische feste Sauerstoffpumpenzelle (21) mit einem ersten Paar gegenpoliger Elektroden (23, 24) aufweist, eine zweite elektrochemische feste Sauerstoffpumpenzelle (31) mit einem zweiten Paar gegenpoliger Elektroden (33, 34), eine Trägerstruktur, die mit den besagten ersten und zweiten Pumpenzellen unter Bildung eines begrenzten Volumens (40) verbunden ist, wenigstens eine Öffnung (41) zur Herstellung einer Verbindung zwischen besagtem begrenztem Volumen (40) und besagtem Gasgemisch, erste externe Stromkreismittel, die mit besagter erster Pumpenzelle (21) zum Anlegen einer Spannung an besagte erste Pumpenzelle verbunden sind, so daß eine erste Pumpenzellenelektrode (24) des besagten Paares gegenpoliger Elektroden in besagtem begrenztem Volumen negativ beaufschlagt wird, und zwar (i) in ausreichendem Maße um im wesentlichen alle Gasmoleküle des besagten zweiten sauerstoffhaltigen Gases in dem begrenzten Volumen aus diesem besagten begrenzten Volumen (40) herauszupumpen oder durch einen die besagte erste Pumpenzelle durchfließenden Strom zu zersetzen, und (ii) in nicht ausreichendem Maße, das besagte Meßgas zu zersetzen; zweite externe Stromkreismittel, die mit besagter zweiter Pumpenzelle (31) zum Anlegen einer zweiten Spannung an die besagte zweite Pumpenzelle verbunden sind, so daß eine zweite Pumpenzellenelektrode (33) des besagten zweiten Paares gegenpoliger Pumpenzellenelektroden in besagtem Volumen negativ beaufschlagt wird, und zwar in ausreichendem Maße, nur im wesentlichen das gesamte Meßgas in dem begrenzten Volumen durch einen die besagte zweite Pumpenzelle durchfließenden Strom zu zersetzen, und dritte externe Stromkreismittel, die mit der besagten zweiten Pumpenzelle (31) zur Messung des besagten, die besagte zweite Pumpenzelle durchfließenden Stromes verbunden sind, wobei der besagte Strom der zweiten Pumpenzelle zum relativen Anteil des besagten Meßgases in dem besagten Gasgemisch proportional ist.

2. Elektrochemische Vorrichtung nach Anspruch 1, des weiteren eine auf der Oberseite der besagten zweiten Pumpenzellenelektrode (33) in besagtem Volumen (40) aufgetragene poröse Schicht (38) enthaltend.

3. Elektrochemische Vorrichtung nach Anspruch 1, des weiteren eine Trennwand (42) innerhalb des besagten Volumens (40) aufweisend, wobei besagte Trennwand das besagte Volumen in zwei Kammern teilt, die über eine Öffnung (43) in der besagten Trennwand miteinander in Verbindung stehen.

4. Elektrochemische Sauerstoffpumpvorrichtung zur Messung des relativen Anteils eines im wesentlichen aus wenigstens einem Sauerstoffhaltigen Gas bestehenden Meßgases in einem Gasgemisch mit zusätzlich wenigstens einem zweiten sauerstoffhaltigen Gas, das bei einer Spannung aus der besagten Vorrichtung herausgepumpt werden kann oder dissoziieren kann, die kleiner ist als die Spannung, bei welcher das besagte Meßgas dissoziiert, wobei besagte elektrochemische Vorrichtung eine im wesentlichen flache erste feste elektrochemische Sauerstoffpumpenzelle (81) aufweist, die ein relativ dichtes Plättchen (82) aufweist, das auf jeder von zwei im Abstand von einander angeordneten Seiten des besagten Plättchens eine poröse Elektrode eines Paares poröser Elektroden (83, 84) aufweist, sowie eine auf einer der Elektroden (83) der besagten ersten Pumpenzelle aufgetragene erste poröse Schicht (89), eine im wesentlichen flache feste zweite elektrochemische Sauerstoffpumpenzelle (88), die eine erste poröse Elektrode (85) enthält, eine zweite poröse Schicht (86) und eine nachträglich auf die besagte erste poröse Schicht aufgetragene zweite poröse Elektrode (87), erste externe Stromkreismittel, die mit besagter zweiter Pumpenzelle (88) zum Anlegen einer ersten Spannung an besagte zweite Pumpenzelle verbunden sind, so daß die besagte zweite Elektrode (87) positiv beaufschlagt wird, und zwar (i) in ausreichendem Maße, um im wesentlichen alle Gasmoleküle des besagten zweiten sauerstoffhaltigen Gases in der ersten porösen Schicht (89) aus dieser herauszupumpen oder durch einen die besagte zweite Pumpenzelle durchfließenden Strom zu zersetzen, und (ii) in nicht ausreichendem Maße, das besagte Meßgas zu zersetzen; sowie zweite Stromkreismittel, die mit besagter erster Pumpenzelle (81) zum Anlegen einer zweiten Spannung an der besagten ersten Pumpenzelle verbunden sind, so daß die freiliegende Elektrode (84) der besagten ersten Pumpenzelle positiv beaufschlagt wird, und zwar in ausreichendem Maße, nur im wesentlichen alle Gasmoleküle des besagten Meßgases in der besagten ersten porösen Schicht (89) zu zersetzen; und dritte externe Stromkreismittel, die mit besagter erster Pumpenzelle zur Messung des die besagte erste Pumpenzelle durchfließenden Stromes verbunden sind, wobei dieser besagte Strom zu dem relativen Anteil des besagten Meßgases in besagtem Gasgemisch proportional ist.

5. Elektrochemische Vorrichtung nach einem beliebigen der vorangehenden Ansprüche, worin besagte erste und zweite externe Stromkreismittel geeignet sind, jeweils die besagte erste und zweite Spannung anzulegen, und zwar unabhängig ausgewählt zwischen (i) kontinuierlichem und (ii) intermittierendem Betrieb.

6. Elektrochemische Vorrichtung nach einem beliebigen der vorangehenden Ansprüche, worin besagte dritte externe Stromkreismittel geeignet sind, besagten Strom zu messen, und zwar unabhängig ausgewählt zwischen (i) kontinuierlicher und (ii) intermittierender Messung.

7. Elektrochemische Vorrichtung nach einem beliebigen der vorangehenden Ansprüche, außerdem ein Heizelement (29) enthaltend, so daß die Temperatur der Vorrichtung über mindestens 500 °C gehalten werden kann.

8. Elektrochemische Vorrichtung nach einem der Ansprüche 1 oder 2, worin das besagte Gasgemisch Luft ist, das besagte Meßgas H₂O ist, und besagte erste externe Stromkreismittel geeignet sind, eine erste Spannung im Bereich von 0,2 bis 1,0 Volt an der zugeordneten Pumpenzelle anzulegen.

9. Elektrochemische Vorrichtung nach Anspruch 8, worin besagte zweite externe Stromkreismittel geeignet sind, an der zugeordneten Pumpenzelle eine zweite Spannung im Bereich von 1,3 bis 2,0 Volt anzulegen.

10. Unter Einsatz einer elektrochemischen Sauerstoffpumpvorrichtung nach einem beliebigen der Ansprüche 1 bis 3, Verfahren zur Messung des relativen Anteils eines im wesentlichen aus wenigstens einem sauerstoffhaltigen Gas bestehenden Meßgases in einem Gasgemisch mit zusätzlich wenigstens einem zweiten sauerstoffhaltigen Gas, das bei einer Spannung aus der besagten Vorrichtung herausgepumpt werden kann oder dissoziieren kann, die kleiner ist als die Spannung, bei welcher das besagte Meßgas dissoziiert, wobei das besagte Verfahren die folgenden Schritte umfaßt: Herstellen einer Verbindung zwischen besagtem Gasgemisch und einem begrenzten Volumen (40) der besagten Vorrichtung, das Anlegen einer ersten Spannung an besagte erste Pumpenzelle (21), so daß eine erste Pumpenzellenelektrode (24) des besagten ersten Paares gegenpoliger Elektroden (23, 24) in dem besagten begrenzten Volumen negativ beaufschlagt wird, und zwar (i) in ausreichendem Maße, um im wesentlichen alle Gasmoleküle des besagten zweiten sauerstoffhaltigen Gases in dem begrenzten Volumen aus dem besagten begrenzten Volumen herauszupumpen oder durch einen die besagte erste Pumpenzelle durchfließenden Strom zu zersetzen, und (ii) in nicht ausreichendem Maße, das Meßgas zu zersetzen; sowie das Anlegen einer zweiten Spannung an besagter zweiter Pumpenzelle (31), so daß eine zweite Pumpenzellenelektrode (33) des besagten zweiten Paares gegenpoliger Elektroden (33, 34) in dem begrenzten Volumen negativ beaufschlagt wird, und zwar in ausreichendem Maße, um nur im wesentlichen das gesamte Meßgas in dem besagten begrenzten Volumen durch einen die besagte zweite Pumpenzelle durchfließenden Strom zu zersetzen, und das Messen des die besagte zweite Pumpenzelle (31) durchfließenden Stromes, wobei der Strom in der besagten zweiten Pumpenzelle zu dem relativen Anteil des besagten Meßgases in dem besagten Gasgemisch proportional ist.

11. Unter Einsatz einer elektrochemischen Sauerstoffpumpvorrichtung nach Anspruch 4, Verfahren zur Messung des relativen Anteils eines im wesentlichen aus wenigstens einem sauerstoffhaltigen Gas bestehenden Meßgases in einem Gasgemisch mit zusätzlich wenigstens einem zweiten sauerstoffhaltigen Gas, das bei einer Spannung aus der besagten Vorrichtung herausgepumpt werden kann oder dissoziieren kann, die kleiner ist als die Spannung, bei welcher das besagte Meßgas dissoziiert, wobei das besagte Verfahren die folgenden Schritte umfaßt: Herstellen einer Verbindung zwischen besagtem Gasgemisch und einer ersten porösen Schicht (89) der besagten flachen elektrochemischen Vorrichtung, Anlegen einer ersten Spannung an besagte zweite Pumpenzelle (88), so daß die besagte zweite Elektrode (87) positiv beaufschlagt wird, und zwar (i) in ausreichendem Maße, im wesentlichen alle Gasmoleküle des besagten zweiten sauerstoffhaltigen Gases in besagter erster poröser Schicht (89) aus dieser herauszupumpen oder durch einen die besagte zweite Pumpenzelle durchfließenden Strom zu zersetzen, und (ii) in nicht ausreichendem Maße, das besagte Meßgas zu zersetzen; das Anlegen einer zweiten Spannung an besagte erste Pumpenzelle (81), so daß die freiliegende Elektrode (84) der besagten ersten Pumpenzelle positiv beaufschlagt wird, in ausreichendem Maße, nur im wesentlichen alle Gasmoleküle des besagten Meßgases in der besagten ersten porösen Schicht (89) zu zersetzen; und Messen des besagten durch die besagte erste Pumpenzelle fließenden Stromes, wobei besagter Strom zu dem relativen Anteil des besagten Meßgases in besagtem Gasgemisch proportional ist.

12. Verfahren nach Anspruch 10 oder 11, worin die besagte erste und zweite externe Spannung unabhängig ausgewählt zwischen (i) kontinuierlichem und (ii) intermittierendem Betrieb angelegt wird.

13. Verfahren nach Anspruch 12, worin der besagte Strom unabhängig ausgewählt zwischen (i) kontinuierlicher und (ii) intermittierender Messung gemessen wird.

## Revendications

1. Un dispositif électrochimique de pompage d'oxygène pour mesurer la concentration relative en un gaz objet de la mesure, essentiellement constitué d'au moins un gaz contenant un ou plusieurs atomes d'oxygène au sein d'un mélange gazeux comprenant en outre au moins un second gaz contenant un ou plusieurs atomes d'oxygène, qu'il est possible d'extraire par pompage hors dudit dispositif ou de dissocier à une différence de potentiel inférieure à celle qui est nécessaire pour dissocier ledit gaz objet de la mesure, ledit dispositif comprenant, une première cellule électrochimique solide de pompage d'oxygène (21) disposant d'une première paire d'électrodes en opposition (23, 24), une seconde cellule électrochimique solide de pompage d'oxygène (31) disposant d'une seconde paire d'électrodes en opposition (33, 34), une structure de support rattachée auxdites première et seconde cellules de pompage pour former avec elles un volume restreint (40), au moins une ouverture (41) pour permettre une communication entre ledit volume restreint (40) et ledit mélange gazeux, un premier circuit électrique extérieur raccordé à ladite première cellule de pompage (21) permettant l'application d'une première différence de potentiel aux bornes de ladite première cellule de pompage afin de polariser négativement une première électrode de cellule de pompage (24) faisant partie de ladite première paire d'électrodes en opposition placées à l'intérieur dudit volume restreint, (i) différence de potentiel suffisante pour provoquer l'extraction par pompage, hors dudit volume restreint (40), de la quasi totalité des molécules dudit gaz contenant un ou plusieurs atomes d'oxygène, qui se trouvent à l'intérieur dudit volume restreint, ou leur dissociation par un courant traversant ladite première cellule de pompage et (ii) insuffisante pour provoquer la dissociation dudit gaz objet de la mesure, un second circuit électrique extérieur raccordé à ladite seconde cellule de pompage (31), pour l'application d'une seconde différence de potentiel aux bornes de ladite seconde cellule de pompage, afin de polariser négativement une seconde électrode de cellule de pompage (33) appartenant à ladite seconde paire d'électrodes en opposition placées à l'intérieur dudit volume, tension suffisante pour dissocier exclusivement la quasi totalité dudit gaz objet de la mesure à l'intérieur dudit volume restreint à l'aide d'un courant traversant ladite seconde cellule de pompage, et un troisième circuit électrique extérieur raccordé à ladite seconde cellule de pompage (31) pour mesurer ledit courant traversant ladite seconde cellule de pompage, le courant de ladite seconde cellule de pompage étant proportionnel à la concentration relative dudit gaz objet de la mesure au sein du mélange gazeux.

2. Un dispositif électrochimique tel que revendiqué dans la revendication 1, comprenant en outre une couche poreuse (38) déposée au sommet de ladite seconde électrode de cellule de pompage (33) située à l'intérieur dudit volume (40).

3. Un dispositif électrochimique tel que revendiqué dans la revendication 1, comprenant en outre une paroi (42) placée à l'intérieur dudit volume (40), ladite paroi divisant ledit volume en deux compartiments qui communiquent l'un avec l'autre par une ouverture (43) ménagée dans ladite paroi.

4. Un dispositif électrochimique de pompage d'oxygène pour la mesure de la concentration relative en un gaz faisant l'objet de la mesure constitué essentiellement d'au moins un gaz contenant un ou plusieurs atomes d'oxygène au sein d'un mélange gazeux comprenant en outre au moins un second gaz contenant un ou plusieurs atomes d'oxygène, que l'on peut extraire par pompage hors dudit dispositif ou dissocier à une différence de potentiel inférieure à celle nécessaire pour provoquer la dissociation dudit gaz qui fait l'objet de la mesure, ledit dispositif électrochimique incluant, une première cellule électrochimique solide de pompage d'oxygène généralement plane (81) comprenant une plaquette relativement dense (82) dotée d'une électrode qui appartient à la paire d'électrodes poreuses (83, 84) placées sur chacune des deux faces de ladite plaquette, une première couche poreuse (89) ayant été déposée sur une électrode (83) de ladite première cellule de pompage, une seconde cellule électrochimique solide de pompage d'oxygène généralement plane (88) comprenant une première électrode poreuse (85), une seconde couche poreuse (86) et une seconde électrode poreuse (87), déposées successivement sur ladite première couche poreuse, un premier circuit électrique extérieur étant raccordé à ladite seconde cellule de pompage (88) pour l'application d'une première différence de potentiel aux bornes de ladite seconde cellule de pompage afin de polariser positivement ladite seconde électrode (87), (i) tension suffisante pour provoquer l'extraction par pompage de la quasi totalité des molécules du second gaz, contenant un ou plusieurs atomes d'oxygène, se trouvant à l'intérieur de ladite première couche poreuse (89) ou la dissociation à l'aide d'un courant traversant ladite seconde cellule de pompage et (ii) insuffisante pour dissocier ledit gaz objet de la mesure, un second circuit électrique extérieur étant raccordé à ladite première cellule de pompage (81) pour l'application d'une seconde différence de potentiel aux bornes de ladite première cellule de pompage afin de polariser positivement l'électrode exposée (84) de ladite première cellule de pompage, tension suffisante pour provoquer exclusivement la dissociation de la quasi totalité des molécules dudit gaz objet de la mesure à l'intérieur de ladite première couche poreuse (89), et un troisième circuit électrique extérieur raccordé à ladite première cellule de pompage pour mesurer ledit courant traversant ladite première cellule de pompage, ledit courant étant proportionnel à la concentration relative dudit gaz objet de la mesure au sein du mélange gazeux.

5. Un dispositif électrochimique tel que revendiqué dans l'une quelconque des revendications précédentes, dans lequel lesdits premier et second circuits extérieurs sont adaptés à l'application desdites première et seconde différences de potentiel, respectivement, selon des modes sélectionnés indépendamment à partir de (i) le mode continu et (ii) le mode intermittent.

6. Un dispositif électrochimique tel que revendiqué dans l'une quelconque des revendications précédentes, dans lequel ledit troisième circuit électrique extérieur est adapté à la mesure dudit courant selon des modes sélectionnés indépendamment à partir de (i) le mode continu et (ii) le mode intermittent.

7. Un dispositif électrochimique tel que revendiqué dans l'une quelconque des revendications précédentes, comprenant en outre une résistance chauffante (29) pour le maintient de la température du dispositif à une température supérieure à environ 500°C.

8. Un dispositif électrochimique tel que revendiqué dans les revendications 1 ou 2, dans lequel ledit mélange gazeux est de l'air, ledit gaz objet de la mesure est du H₂O et dans lequel ledit premier circuit extérieur est adapté à l'application d'une première différence de potentiel aux bornes de la cellule de pompage qui lui est associée, comprise dans l'intervalle allant d'environ 0,2 à environ 1,0 volt.

9. Un dispositif électrochimique tel que revendiqué dans la revendication 8, dans lequel ledit second circuit extérieur est adapté à l'application d'une seconde différence de potentiel aux bornes de la cellule de pompage qui lui est associée comprise dans l'intervalle allant d'environ 1,3 à environ 2,0 volts.

10. Une méthode utilisant un dispositif électrochimique de pompage d'oxygène tel que revendiqué dans l'une quelconque des revendications 1 à 3, pour la mesure de la concentration relative en un gaz objet de la mesure, constitué essentiellement d'au moins un gaz contenant un ou plusieurs atomes d'oxygène au sein d'un mélange gazeux comprenant en outre au moins un second gaz contenant un ou plusieurs atomes d'oxygène, qu'il est possible de pomper hors dudit dispositif ou de dissocier sous une différence de potentiel inférieure à celle qui est nécessaire pour dissocier ledit gaz objet de la mesure, ladite méthode comprenant les étapes suivantes : l'établissement d'une communication entre ledit mélange gazeux et un volume restreint (40) dudit dispositif, l'application d'une première différence de potentiel aux bornes de ladite première cellule de pompage (21) pour polariser négativement une première électrode de cellule de pompage (24) appartenant à ladite première paire d'électrodes en opposition (23, 24) placées à l'intérieur du volume restreint, (i) différence de potentiel suffisante pour provoquer l'extraction par pompage hors dudit volume restreint de la quasi totalité des molécules dudit second gaz contenant un ou plusieurs atomes d'oxygène, à l'intérieur dudit volume restreint, ou la dissociation à l'aide d'un courant traversant ladite première cellule de pompage et (ii) insuffisante pour provoquer la dissociation du gaz objet de la mesure: l'application d'une seconde différence de potentiel aux bornes de ladite seconde cellule de pompage (31) pour polariser négativement une seconde électrode de cellule de pompage (33) appartenant à ladite seconde paire d'électrodes en opposition (33, 34) placées à l'intérieur dudit volume restreint, tension suffisante pour provoquer exclusivement la dissociation de la quasi totalité dudit gaz objet de la mesure à l'intérieur dudit volume restreint, à l'aide d'un courant traversant ladite seconde cellule de pompage, ladite mesure dudit courant traversant ladite seconde cellule de pompage (31), le courant de ladite seconde cellule de pompage étant proportionnel à la concentration relative dudit gaz objet de la mesure au sein du mélange gazeux.

11. Une méthode utilisant un dispositif électrochimique de pompage d'oxygène tel que revendiqué dans la revendication 4, pour la mesure de la concentration relative en un gaz objet de la mesure constitué essentiellement d'au moins un gaz contenant un ou plusieurs atomes d'oxygène au sein d'un mélange gazeux comprenant en outre au moins un second gaz contenant un ou plusieurs atomes d'oxygène qu'il est possible d'extraire par pompage hors du dispositif ou de dissocier sous une différence de potentiel inférieure à celle qui est nécessaire pour provoquer la dissociation dudit gaz objet de la mesure, ladite méthode comprenant les étapes suivantes : l'établissement d'une communication entre ledit mélange gazeux et une première couche poreuse (89) dudit dispositif électrochimique plan, l'application d'une première différence de potentiel aux bornes de ladite seconde cellule de pompage (88) pour polariser positivement ladite seconde électrode (87), (i) tension suffisante pour provoquer l'extraction par pompage de la quasi totalité des molécules dudit second gaz contenant un ou plusieurs atomes d'oxygène qui se trouve à l'intérieur de ladite première couche poreuse (89) ou la dissociation à l'aide d'un courant traversant ladite seconde cellule de pompage et (ii) tension insuffisante pour provoquer la dissociation dudit gaz objet de la mesure, l'application d'une seconde différence de potentiel aux bornes de ladite première cellule de pompage (81) pour polariser positivement l'électrode exposée (84) de ladite première cellule de pompage, différence de potentiel suffisante pour provoquer exclusivement la dissociation de la quasi totalité des molécules dudit gaz objet de la mesure à l'intérieur de ladite première couche poreuse (89), et la mesure dudit courant traversant ladite première cellule de pompage, ledit courant étant proportionnel à la concentration relative dudit gaz objet de la mesure au sein dudit mélange gazeux.

12. Une méthode telle que revendiquée dans les revendications 10 ou 11, dans laquelle lesdites première et seconde différences de potentiel extérieures sont appliquées selon des modes sélectionnés indépendamment à partir de (i) le mode continu et (ii) le mode intermittent.

13. Une méthode telle que revendiquée dans la revendication 12, dans laquelle ledit courant est mesuré selon des modes sélectionnés indépendamment à partir de (i) le mode continu et (ii) le mode intermittent.
